# EUROPÄISCHE PATENTSCHRIFT

(11) **EP 0 990 015 B1**
(45) Veröffentlichungstag und Bekanntmachung des Hinweises auf die Patenterteilung: **09.10.2002**
(21) Anmeldenummer: 98934996.4
(22) Anmeldetag: 25.06.1998
(51) Int. Cl.: C09D 1/00, C09D 5/00, C09D 183/02

(54) **BESCHICHTUNGSMITTEL ZUR VERRINGERUNG DER ANSCHMUTZNEIGUNG VON FASSADEN**
COATING AGENT FOR REDUCING THE SOILING PROCESS OF FACADES
AGENT DE REVETEMENT POUR REDUIRE LA TENDANCE A L'ENCRASSEMENT DES FACADES

(30) Priorität: 25.06.1997 DE 19726814
(43) Veröffentlichungstag der Anmeldung: 05.04.2000
(73) Patentinhaber: Clariant GmbH, 65929 Frankfurt am Main (DE); DEUTSCHE AMPHIBOLIN-WERKE VON ROBERT MURJAHN GmbH + Co. KG, 64369 Ober-Ramstadt (DE)
(72) Erfinder: MURJAHN, Klaus, D-64287 Darmstadt (DE); ACKERMANN, Hermann, D-64372 Ober-Ramstadt (DE); RADEMACHER, Ingo, D-64807 Dieburg (DE)
(86) Internationale Anmeldenummer: EP9803879
(87) Internationale Veröffentlichungsnummer: WO99000457

(56) Entgegenhaltungen:
- EP-A- 0 281 936
- EP-A- 0 632 161
- WO-A-97/47694
- DE-A- 4 201 950
- PATENT ABSTRACTS OF JAPAN vol. 095, no. 003, 28. April 1995 & JP 06 336559 A (NIPPON FUEROO KK), 6. Dezember 1994
- PATENT ABSTRACTS OF JAPAN vol. 096, no. 012, 26. Dezember 1996 & JP 08 217968 A (OSAKA TORYO KOGYO KYODO KUMIAI), 27. August 1996
- PATENT ABSTRACTS OF JAPAN vol. 018, no. 485 (C-1248), 9. September 1994 & JP 06 157947 A (MITSUBISHI MATERIALS CORP), 7. Juni 1994

## Beschreibung

Die vorliegende Erfindung betrifft ein transparentes Beschichtungsmittel auf Basis eines Schichtsilikates, seine Herstellung sowie seine Verwendung zur Verringerung der Anschmutzneigung von Fassaden.

Wie alle anderen Oberflächen verschmutzen auch Fassaden mit der Zeit durch Ablagerungen aus der Luft auf die Oberfläche. Diese Verschmutzung macht sich durch eine Vergrauung bemerkbar. Mit Lichtmikroskopie und REM-Untersuchungen an freibewitterten Fassadenbeschichtungen wurde ermittelt, daß der Schmutz im wesentlichen aus anorganischen Partikeln bis zu einer Größe von 10 um sowie geringen Anteilen an Ruß besteht.

Aus US-A 2 877 142 ist bekannt, daß anorganische Sole, beispielsweise Kieselsole, eine schmutzabweisende Wirkung auf Oberflächen erzeugen. Der Einsatz von Kieselsolen an Fassaden ist aufgrund ihrer geringen Viskosität erschwert. Im DIN 4 mm-Auslaufbecher zeigen diese Sole eine Viskosität von 14,3 s ( 23°C ). Dabei werden als Applikationsverfahren das Streichen, das Rollen und das Spritzen verwendet. Die Kieselsole laufen bei einer praxisgerechten Auftragsmenge von circa 50 - 250 g/m², bevorzugt 50 - 150 g/m², von senkrechten Flächen wie Fassaden ab. Es kann somit keine gleichmäßige Schichtdicke erzielt werden, die für eine einheitliche schmutzabweisende Wirkung der Beschichtung erforderlich ist. Bei Auftragsmengen von 50 g/m² bis 250 g/m² entstehen Spritzer und Wasserläufer, die eine gleichmäßige Beschichtung verhindern. Eine thixotrope oder zumindest strukturviskose Konsistenz, die den problemlosen Einsatz von Streichwerkzeugen erlaubt, ist mit Solen nicht möglich. So eine Konsistenz ist erreicht wenn im DIN 4 mm - Auslaufbecher zumindest Auslaufzeiten von mehr als 100 s gemessen werden.

Die Aufgabe der vorliegenden Erfindung bestand nun darin, ein transparentes, gut verarbeitbares, farbneutrales und zumindest strukturviskoses Beschichtungsmittel zur Verfügung zu stellen, welches einen gleichmäßigen Auftrag auf Fassaden ermöglicht und zugleich deren Anschmutzneigung und die Glanzabschwächung verringert.

Es zeigte sich, daß nur wenige ausgewählte Materialien die Aufgabe für das erfindungsgemäße Beschichtungsmittel erfüllen. Die Wahl eines geeigneten rheologischen Stoffes beeinflußt die Wirkung des Beschichtungsmaterials entscheidend. So führen organische Gelbildner wie Celluloseether, Polyacrylate und Polyurethanverdicker zu einer Aufhebung der verschmutzungsreduzierenden Wirkung der Kieselsole. Bei anorganischen Gelbildnem tritt eine Aufhebung der verschmutzungsreduzierenden Wirkung der Kieselsole nicht auf. So zeigten Beschichtungsmittel auf Basis von Kieselsol und synthetischen oder natürlichen Schichtsilikaten eine deutliche Reduzierung der Verschmutzungsneigung. Jedoch sind anorganische natürliche Schichtsilikate wegen der fehlenden Farbneutralität des Beschichtungsmittels nicht für die gestellte Aufgabe geeignet. Die beobachtete Gelbstichigkeit des Beschichtungsmittels erlaubte keine farbneutrale Auftrocknung. Die Gelbstichigkeit stammt aus den Eiseneinschlüssen der Schichtsilikate. Schichtsilikate aller bekannten Abbaugebiete weisen Eiseneinschlüsse auf. Darüberhinaus weisen die natürlichen Schichtsilikate keine vollständige Transparenz auf. Die mittleren Partikelgrößen der bekannten natürlichen Schichtsilikate liegen im Mikrometerbereich. Pyrogene Kieselsäuren sind ebenfalls anorganische Verbindungen, lassen sich aber mit Kieselsol und Wasser nicht zu einem homogenen Beschichtungsmittel verarbeiten und erfüllen damit nicht die gestellte Aufgabe. Fällungskieselsäuren sind ebenfalls anorganische Verbindungen weisen aber mittlere Partikelgrößen oberhalb von 1 Mikrometer auf. Daher trocknet das aus ihnen mit Kieselsol und Wasser hergestellte Beschichtungsmittel nicht transparent auf.

Erstaunlicherweise wurde festgestellt, daß synthetische anorganische Schichtsilikate, die mit Wasser eine transparente gallertartige Paste ergeben, alleine für sich und in Kombination mit Kieselsolen eine schmutzabweisende Wirkung besitzen und auch die übrigen Bedingungen der Aufgabenstellung erfüllen. Sie sind daher als Beschichtungsmittel für die genannte Aufgabenstellung geeignet. Vorzugsweise wird die Viskosität dabei so eingestellt, daß ein gleichmäßiger Auftrag von 50 g/m² bis zu 250 g/m² möglich wird. Die Konsistenz ist so erhöht, daß im DIN 4 mm-Auslaufbecher zumindest Auslaufzeiten von mehr als 100 s gemessen werden. Als noch günstiger erweist es sich, wenn keine Fluidität des Mediums mehr festgestellt werden kann. Die entstandene Beschichtungsmasse zeigt thixotrope Eigenschaften. Ein Auftrag auf Untergründe kann nunmehr ohne Spritzer und Abläufer auch mit Streichwerkzeugen erfolgen. Die entstehende Beschichtung ist transparent und zeigt keine Farbveränderungen des Untergrundes.

Gegenstand der Erfindung ist demnach ein transparentes Fassaden-Beschichtungsmittel, enthaltend mindestens ein in Wasser ein kolloidales Gel bildendes synthetisches, nanoskaliges Schichtsilikat. Das Beschichtungsmittel ist transparent und das verwendete Schichtsilikat ein nanoskaliges mit einer mittleren Teilchengröße von 5 bis 800 nm, vorzugsweise 25 bis 500 nm, insbesondere von 100 bis 400 nm.

Erfindungsgemäß geeignete Schichtsilikate sind kommerziell erhältlich; beispielsweise eignen sich SKS - 20 / Saponit (Hoechst AG, Frankfurt, Deutschland), SKS - 21 / Hectorit (Hoechst AG, Frankfurt, Deutschland), Optigel® SH (Süd Chemie AG, München, Deutschland) und Laponite® RD (Deutsche Solvay Werke GmbH, Solingen, Deutschland). Geeignet sind auch Mischungen dieser Schichtsilikate untereinander. Alle diese kolloidalen Gele, die aus Wasser mit synthetischen anorganischen Schichtsilikaten, vorzugsweise mit einer Partikelgröße unterhalb von 1 Mikrometer hergestellt worden sind, erfüllen die erfindungsgemäße Aufgabe. Die gewünschten Eigenschaften zeigt das transparente Beschichtungsmittel auch dann, wenn andere, zumindest kolloidal lösliche anorganische Substanzen (z.B. Kieselsole ), enthalten sind.

Im folgenden ist die Erfindung anhand von Beispielen näher erläutert.

Es wurden verschiedene Beschichtungsmittel hergestellt und ihre Wirkung auf den Untergrund und im Verschmutzungstest geprüft. Die Beschichtungsmittel enthielten verschiedene gelbildende Substanzen sowie Kieselsole und Wasser. Die Herstellung und die Prüfung sind im Detail beschrieben.

### Beispiel 1:

| | |
|---|---|
| Zusammensetzung | 6,7 g Klebosol 30 N 12 (Societé Française Hoechst / Kieselsol ) |
| | 91,3 g Wasser |
| | 2,0g Laponite RD |

Es wurden 38 g Wasser vorgelegt. Das Laponite wurde unter Rühren am Dissolver bei 2700 U/min, zugegeben. Nach 10 Minuten Rühren war das Basisgel hergestellt. Diese Masse reifte 16 h lang bei 23°C und 50% relative Luftfeuchtigkeit.
Anschließend wurden 53,3 g Wasser sowie das Kieselsol zugegeben. Abschließend wurde die Masse für 5 Minuten am Dissolver gerührt.
Das kolloidale Gel wurde dann auf einen Kunststoffdispersions-Fassadenanstrich mit circa 50 Gewichtsprozent Kunstharzdispersion als Bindemittelanteil gestrichen. Der Auftrag erfolgte mit Streichwerkzeugen ohne Spritzer und Abläufer. Es ergab sich ein transparenter, nicht wahrnehmbarer gleichmäßiger Anstrich. Die Auftragsmenge betrug dabei 60 g/m².

Parallel dazu wurde das Beschichtungsmittel auf einen 24 Stunden lang getrockneten Kunstharzdispersionsputz gestrichen. Die Auftragung der Masse erfolgte mit den gleichen Werkzeugen. Es wurde ein gleichmäßiger Anstrich ohne Wasserläufer erhalten. Die Auftragsmenge betrug 150 g /m².

### Beispiel 2:

| | |
|---|---|
| Zusammensetzung | 95,0 g Wasser |
| | 5,0g Laponite RD |

Das Wasser wurde vorgelegt. Das Laponite wurde unter Rühren am Dissolver bei 2700 U/min, zugegeben. Nach 10 Minuten Rühren war das Basisgel hergestellt. Das Beschichtungsmittel reifte abschließend 16 h lang bei 23°C und 50 % relative Luftfeuchtigkeit.

Das kolloidale Gel wurde dann auf einen Kunststoffdispersions-Fassadenanstrich mit circa 50 Gewichtsprozent Kunstharzdispersion als Bindemittelanteil gestrichen. Der Auftrag erfolgte mit Streichwerkzeugen ohne Spritzer und Abläufer. Es ergab sich ein transparenter, nicht wahrnehmbarer gleichmäßiger Anstrich. Die Auftragsmenge betrug dabei 70 g/m².

Parallel dazu wurde eine Prüfung der Verschmutzungsneigung des Beschichtungsmittel durchgeführt. Dazu wurde auf die Oberflächen von Lenetafolien eine Kunstharzdispersionsfarbe mit circa 50 Gewichtsprozent Kunstharzdispersion als Bindemittelanteil gerakelt. Die Auftragsmenge betrug 250 g/m². Die Folien wurden 48 Stunden lang bei Normklima (23°C / 50 % relative Luftfeuchtigkeit) und abschließend 24 Stunden lang bei 40°C gelagert. Auf diese Proben wurde anschließend das Beschichtungsmittel mit einem Pinsel aufgetragen. Die Auftragsmenge betrug 100 g/m². Die Beschichtungen wurden dann bei Raumtemperatur getrocknet. Anschließend wurde die Probe mit Staub deckend bestäubt. Als Modellsubstanz diente Flugasche. Der nichtanhaftende Staub der Probe wurde mit Preßluft entfernt. Als Referenz zur Prüfung diente die Oberfläche einer Kunstharzdispersionsfarbe. Beide Proben wurden per Auge geprüft. Das Beschichtungsmittel zeigt eine deutliche Reduzierung der Schmutzanhaftung für die Kunstharzdispersionsoberfläche.

### Beispiel 3:

| | |
|---|---|
| Zusammensetzung | 6,7 g Klebosol 30 N 12 (Société Française Hoechst / Kieselsol) |
| | 91,3g Wasser |
| | 2,0 g Gelbildner (s. Beispiel) |

Es wurden 38 g Wasser vorgelegt. Der Gelbildner wurde unter Rühren am Dissolver bei 2700 U/min. zugegeben. Nach 10 Minuten Rühren war das Basisgel hergestellt.
Diese Masse reifte 16 h lang bei 23 °C und 50 % relative Luftfeuchtigkeit. Anschließend wurden 53,3 g Wasser sowie das Kieselsol zugegeben. Abschließend wurde die Masse für 5 Minuten am Dissolver gerührt.
Als Gelbildner wurden die folgenden Substanzen eingesetzt:
Aus der Klasse der Fällungskieselsäuren:
   Kieselsäure 320 DS (DEGUSSA, Hanau, Deutschland) ; Syloid® ED 3 (GRACE, New York, U.S.A.)
Aus der Klasse der natürlichen Schichtsilikate :
   Bentone® CT ( RHEOX) ; Bentone LT (RHEOX) ;
Aus der Klasse der pyrogenen Kieselsäuren :
   Aerosil® LR 972 (DEGUSSA) ;
Aus der Klasse der synthetischen Schichtsilikate :
   Laponite RD (Deutsche Solvay GmbH); Optigel SH (SÜD CHEMIE);
   SKS-20/Saponit (HOECHST); SKS-21/Hectorit (HOECHST);
Aus der Klasse der Polyacrylate :
   Latecoll® D (BASF, Ludwigshafen, Deutschland); Rohagit® SD 15 (ROEHM); Carbopol® (GOODRICH);
Aus der Klasse der Celluloseether:
   Walocel® XM 30.000 PV (WOLFF-WALSRODE, Walsrode, Deutschland);
   Tylose® MG 30.000 YG 8 (HOECHST);
Aus der Klasse der Polyurethan - Verdicker:
   Coatex® BR 125 (COATEX); Acrylsol® RM 8 (ROHM & HAAS); Coatex AC 668 (COATEX); Coapur® 5035 (COATEX); Rheolate® 278 (RHEOX)

Bei der Herstellung des Beschichtungsmittels wurde die Einarbeitung beurteilt. Das Aerosil LR 972 ließ sich nicht unterrühren. Bentone CT und Bentone LT wiesen einen Gelbstich des Beschichtungsmittels auf, so daß keine farbneutralen und transparenten Beschichtungen entstehen können.

Die Beurteilung der Transparenz und der Farbneutralität erfolgte auf einer grünen Kunstharzdispersionsfarbe mit circa 50 Gewichtsprozent Kunstharzdispersion als Bindemittelanteil. Die Farbe wurde auf eine Faserzementplatte gestrichen und nach 3 Tagen Lagerung im Labor mit dem Beschichtungsmittel beschichtet. Nach der Trocknung der Beschichtung bei Raumtemperatur wurde die Erscheinung der Oberfläche mit einem Standard verglichen . Hierbei zeigte sich , daß Kieselsäure 320 DS und Syloid ED 3 keine Transparenz und Farbneutralität aufwiesen. Mit den Gelbildnern Coatex BR 125, Rheolate 278, Coatex BR 100, Acrylsol RM 8, Coatex AC 668 und Coapur 5035 zeigte sich nach Beregnung der Platten und abschließender Trocknung eine fleckige Erscheinung im Vergleich zum Standard. Auch die Polyacrylate Latecoll D ; Rohagit SD 15 und Carbopol zeigten dieses Phänomen.

Zur Prüfung der Verschmutzungsneigung der Beschichtungsmittel wurde, auf die Oberflächen von Lenetafolien, eine Kunstharzdispersionsfarbe mit circa 50 Gewichtsprozent Kunstharzdispersion als Bindemittelanteil gerakelt. Die Auftragsmenge betrug 250 g/m². Die Folien wurden 48 Stunden lang bei Normklima (23°C / 50 % relative Luftfeuchtigkeit) und abschließend 24 Stunden lang bei 40°C gelagert. Auf diese Proben wurde anschließend das Beschichtungsmittel mit einem Pinsel aufgetragen. Die Auftragsmenge betrug 100 g/m². Die Beschichtungen wurden anschließend bei Raumtemperatur getrocknet. Anschließend wurde jeweils eine Probe eines Beschichtungsmittels 15 Stunden lang beregnet. Diese Probe und eine weitere, unberegnete Probe des Beschichtungsmittels wurden betaut und anschließend verschmutzt. Als Schmutz-Modellsubstanz wurde Flugasche eingesetzt. Anschließend wurde die Vergrauung quantifiziert. Dazu wurden die Hellbezugswerte nach DIN 53778 mit dem Farbdifferenz-Meßgerät bestimmt. Die Differenz des Hellbezugswertes der verschmutzten Proben zu unverschmutzten Nullproben ergab das Maß für die Verschmutzungsneigung. Es zeigte sich im Vergleich zur unbeschichteten verschmutzten Kunstharzdispersionsfarbe eine Reduzierung der Schmutzaufnahme bei Laponite RD; SKS-20/Saponit und SKS-21/Hectorit. Keine Reduzierung der Verschmutzungsneigung zeigte sich beim Einsatz von Gelbildnern wie Tylose MG 30.000 YG 8 und Rohagit SD 15. Eine Verstärkung der Verschmutzungsneigung zur unbeschichteten Kunstharzdispersionsfarbe konnte mit Latecoll D, Walocel XM 30.000 PV sowie Coatex BR 100 festgestellt werden.

Eine Zusammenfassung der Ergebnisse nach Gelbildnertypen zeigt die beiliegende Tabelle.

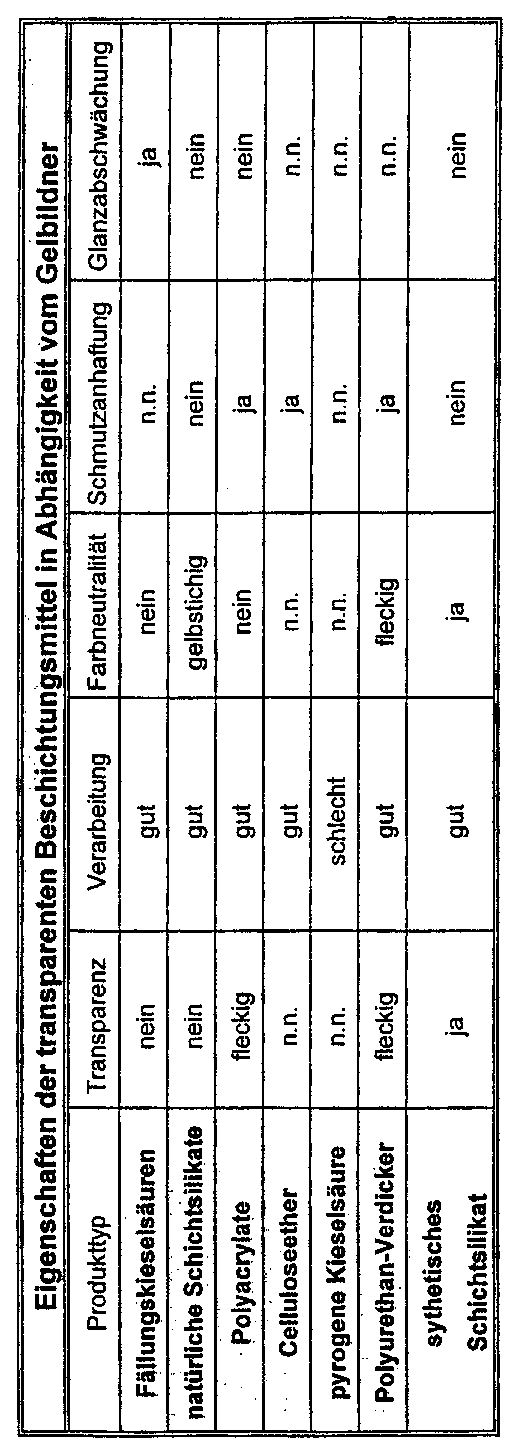

## Patentansprüche

1. Transparentes Fassaden-Beschichtungsmittel, enthaltend mindestens ein mit Wasser ein kolloidales Gel bildendes synthetisches, nanoskaliges Schichtsilikat.

2. Beschichtungsmittel nach Anspruch 1, **dadurch gekennzeichnet, dass** das Schichtsilikat eine mittlere Teilchengrösse von 5 bis 800 nm besitzt.

3. Beschichtungsmittel nach Anspruch 1 oder 2, weiterhin enthaltend mindestens ein Kieselsol.

4. Beschichtungsmittel nach einem oder mehreren der Ansprüche 1 bis 3, **dadurch gekennzeichnet, dass** das Mittel im DIN 4 mm-Auslaufbecher eine Auslaufzeit von mindestens 100 s aufweist.

5. Beschichtungsmittel nach einem oder mehreren der Ansprüche 1 bis 4, **dadurch gekennzeichnet, dass** das Mittel keine Fluidität besitzt.

6. Beschichtungsmittel nach einem oder mehreren der Ansprüche 1 bis 5, **dadurch gekennzeichnet, dass** das Mittel thixotrop ist.

7. Beschichtungsmittel nach einem oder mehreren Ansprüche 1 bis 6, **dadurch gekennzeichnet, dass** das Mittel keinen organischen Gelbildner enthält.

8. Verfahren zur Herstellung eines transparenten Fassaden-Beschichtungsmittels nach Anspruch 1, **dadurch gekennzeichnet, dass** ein mit Wasser ein kolloidales Gel bildendes synthetisches Schichtsilikat mit Wasser versetzt wird und zu einem Gel verarbeitet wird.

9. Verwendung eines transparenten Fassaden-Beschichtungsmittels nach Anspruch 1 in einem Anstrichmittel zur Schmutzabweisung.

10. Verwendung eines transparenten Fassaden-Beschichtungsmittels nach Anspruch 1 als schmutzabweisende Beschichtung.

## Claims

1. A transparent façade coating composition comprising at least one synthetic, nanoscale sheet silicate which forms a colloidal gel with water.

2. The coating composition as claimed in claim 1, wherein the sheet silicate has an average particle size of 5 to 800 nm.

3. The coating composition as claimed in claim 1 or 2, further comprising at least one silica sol.

4. The coating composition as claimed in one or more of claims 1 to 3, which in the DIN 4 mm flow cup has an efflux time of at least 100 s.

5. The coating composition as claimed in one or more of claims 1 to 4, which possesses no fluidity.

6. The coating composition as claimed in one or more of claims 1 to 5, which is thixotropic.

7. The coating composition as claimed in one or more of claims 1 to 6, which comprises no organic gel formers.

8. A process for preparing a transparent façade coating composition as claimed in claim 1, which comprises adding water to a synthetic sheet silicate which forms a colloidal gel with water and processing the mixture to a gel.

9. The use of a transparent facade coating composition as claimed in claim 1 in a coating formulation for the purpose of dirt repellence.

10. The use of a transparent facade coating composition as claimed in claim 1 as a dirt repelling coating.

## Revendications

1. Revêtement de façade transparent contenant au moins un phyllosilicate synthétique nanométrique formant un gel colloïdal avec l'eau.

2. Revêtement selon la revendication 1, **caractérisé en ce que** le phyllosilicate possède une taille moyenne de particules de 5 à 800 nm.

3. Revêtement selon la revendication 1 ou 2 contenant en plus au moins un gel de silice.

4. Revêtement selon une ou plusieurs des revendications 1 à 3, **caractérisé en ce que** le produit présente un temps d'écoulement d'au moins 100 s dans la coupe consistométrique DIN 4 mm.

5. Revêtement selon une ou plusieurs des revendications 1 à 4, **caractérisé en ce que** le produit ne possède pas de fluidité.

6. Revêtement selon une ou plusieurs des revendications 1 à 5, **caractérisé en ce que** produit est thixotropique.

7. Revêtement selon une ou plusieurs des revendications 1 à 6, **caractérisé en ce que** le produit ne contient pas de gélifiant organique.

8. Procédé pour la préparation d'un revêtement de façade transparent selon la revendication 1, **caractérisé en ce qu'**on ajoute de l'eau à un phyllosilicate synthétique formant un gel colloïdal avec l'eau et on le transforme en gel.

9. Utilisation d'un revêtement de façade transparent selon la revendication 1, dans une peinture comme agent anti-salissure.

10. Utilisation d'un revêtement de façade selon la revendication 1 comme revêtement anti-salissure.
